# EUROPEAN PATENT APPLICATION

(11) **EP 2 712 037 A2**
(43) Date of publication of application: **26.03.2014**
(21) Application number: 13184389.8
(22) Date of filing: 15.02.2012
(51) Int. Cl.: H01S 3/11, H01S 3/117, H04N 9/31

(54) **Laser display method and system**

(30) Priority: 25.02.2011 US 201161446746 P; 31.05.2011 US 201161491558 P; 08.12.2011 US 201161568270 P; 08.12.2011 US 201161568328 P
(62) Divisional of application: 12706392.3
(71) Applicant: Lippey, Barret, Salem, NH 03079 (US); Lee, Ian, Salem, NH 03079 (US); Turner, Ian, Salem, NH 03079 (US); Styskal, Gary, Salem, NH 03079 (US); Walker, Brad, Plano, TX 75074 (US); Poradish, Frank, Plano, TX 75074 (US)
(72) Inventor: Lippey, Barret, Salem, NH 03079 (US); Lee, Ian, Salem, NH 03079 (US); Turner, Ian, Salem, NH 03079 (US); Styskal, Gary, Salem, NH 03079 (US); Walker, Brad, Plano, TX 75074 (US); Poradish, Frank, Plano, TX 75074 (US)
(74) Representative: Findlay, Alice Rosemary

(57) **Abstract**

A laser display system and method that includes some or all of the following parts: an optical apparatus that includes two spatial light modulators and a laser, and switches the laser between the light modulators; two lasers that combine pulses to illuminate one spatial light modulator; controlling a laser Q-switch to stay in CW mode for variable periods of time to generate variable-amplitude pulses; and loading and resetting a digital micromirror device between pulses of light.

## Description

### BACKGROUND OF THE INVENTION

Diode Pumped Solid State (DPSS) laser light sources can efficiently generate high-power laser light. In the conventional method of using DPSS lasers with digital image projectors that are based on time sequential color, a large percentage of the laser light is not available because DPSS lasers cannot be pulsed at the rates required for time sequential color. Moreover, when combining DPSS lasers with cinema-quality digital image projectors based on digital micromirror devices (DMDs), high power and high bit depth are difficult to achieve because high-power DPSS lasers cannot be pulsed at the rates required to achieve high bit depth.

Q-switches are conventionally used to store energy to make high power optical pulses in Diode Pumped Solid State (DPSS) lasers. For most applications, pulses with constant amplitude are sufficient, but for imaging applications based on DMDs, high bit depth is difficult to achieve with constant amplitude pulses when DPSS lasers are operated at frequencies significantly below 100 kHz. Also, image artifacts may occur if the high pulse energy of the DPSS laser corrupts the memory state of the DMD.

### SUMMARY OF THE INVENTION

In general, in one aspect, a method of generating light that includes the steps of controlling a Q-switch to stay in CW mode for a variable period of time, building a variable amount of energy in a laser crystal that depends on the variable period of time, and generating a variable-amplitude pulse of laser light that depends on the variable amount of laser energy.

Implementations may include one or more of the following features. The variable-amplitude pulse of laser light may be used to produce a digital image. The variable-amplitude pulse of laser light may be used to increase the bit depth of the digital image. There may be generation of a first full-amplitude pulse of laser light before the variable-amplitude pulse of laser light, and generation of a second full-amplitude pulse of laser light after the variable-amplitude pulse of laser light, and the period between the first full-amplitude pulse of laser light and the variable-amplitude pulse of laser light is equal to the period between the variable-amplitude pulse of laser light and the second full-amplitude pulse of laser light.

In general, in one aspect, a method of digitally projecting an image that includes the steps of generating a first pulse of light, loading a first reset group of a first DMD with a first stream of bit information, resetting the first reset group to a first data state, and generating a second pulse of light. Loading the first reset group of the first DMD with the first stream of bit information and resetting the first reset group to the first data state occur between generating the first pulse of light and generating the second pulse of light. No light pulses are generated between generating the first pulse of light and generating the second pulse of light, and the first pulse of light and the second pulse of light illuminate the first DMD.

Implementations may include one or more of the following features. The second pulse of light may cause a photoelectric upset of the first DMD if the second pulse of light occurs during the loading and resetting of the first reset group. Loading of the DMD may not take place during the second pulse of light. The first pulse of light may be laser light. The first pulse of light and the second pulse of light may occur more than 18 microseconds apart and less than 200 microseconds apart.

In general, in one aspect, an optical apparatus that includes, a first spatial light modulator, a second spatial light modulator, and a laser light source. The laser light source is alternately switched to illuminate the first light spatial light modulator and the second spatial light modulator.

Implementations may include one or more of the following features. The first spatial light modulator may include a DMD. The laser light source may include a pulsed laser. The pulsed laser may include a DPSS laser. The laser light source may generate a green light beam.

In general, in one aspect, an optical apparatus that includes a first laser light source that generates a first beam of light, a second laser light source that generates a second beam of light, and a first spatial light modulator. The first beam of light comprises a first series of light pulses at a fixed wavelength. The second beam of light comprises a second series of light pulses at the same fixed wavelength. The first beam of light is combined with the second beam of light to form a third beam of light. The third beam of light comprises a third series of light pulses. The third beam of light illuminates the first spatial light modulator.

Implementations may include one or more of the following features. The first laser light source may include a diode-pumped solid-state laser. The diode-pumped solid-state laser may include an intra-cavity frequency doubler. The first spatial light modulator may include a DMD. The first series of light pulses may be interleaved in time with the second series of light pulses to form the third series of light pulses. The third series of light pulses may have a frequency greater than approximately 50 kHz.

### BRIEF DESCRIPTION OF THE SEVERAL VIEWS OF THE DRAWING

FIG. 1 is a flowchart of a laser display method and system;

FIG. 2 is a block diagram of a laser projector architecture that efficiently uses DPSS laser light;

FIG. 3 is a block diagram of another laser projector architecture that efficiently uses DPSS laser light;

FIG. 4 is a timing diagram a laser projector architecture that efficiently uses DPSS laser light;

FIG. 5 is a flowchart of a laser projection method that efficiently uses DPSS laser light;

FIG. 6 is a block diagram of an optical apparatus with two high power oscillators (HPOs) combined into one optical parametric oscillator (OPO);

FIG. 7 is a block diagram of an optical apparatus with four HPOs combined into two OPOs;

FIG. 8A is a timing diagram of an optical apparatus with two HPOs;

FIG. 8B is a timing diagram of an optical apparatus with four HPOs;

FIG. 9A is a timing diagram of an optical apparatus with two HPOs that have different pulse amplitudes;

FIG. 9B is a timing diagram of an optical apparatus with two HPOs where one HPO has an irregular hold-off time;

FIG. 10 is a block diagram of an HPO;

FIG. 11 is a block diagram of an OPO with two parametric crystals;

FIG. 12 is a block diagram of a laser projector with two HPOs;

FIG. 13 is a flowchart of a method of interleaving pulses from two laser beams and modulating the interleaved beam;

FIG. 14 is a flowchart of a method of generating variable amplitude laser pulses;

FIG. 15 is a timing diagram of a prior art method of generating constant amplitude laser pulses;

FIG. 16 is a timing diagram of a method of generating half amplitude laser pulses;

FIG. 17 is a timing diagram of a method of generating quarter amplitude laser pulses;

FIG. 18 is a timing diagram of a method of skipping laser pulses;

FIG. 19 is a block diagram of a laser projector that uses variable amplitude laser pulses;

FIG. 20 is a flowchart of a first timing method for pulsed-laser projection;

FIG. 21 is a flowchart of a second timing method for pulsed-laser projection;

FIG. 22 is a flowchart of a timing method for pulsed-laser projection that uses red, green, and blue light;

FIG. 23A is a block diagram of an optical apparatus with three sources of light that separately illuminate three DMDs; and

FIG. 23B is a block diagram of an optical apparatus with three sources of light that combine and then separate to illuminate three DMDs.

### DETAILED DESCRIPTION

A digital laser projector combines a number of sub-systems which are used together to project digital images using laser light. These sub-systems include a source of laser light that makes laser light beams, optical elements to guide the laser light beams, one or more spatial light modulators which act as pixel-by-pixel light valves to form images, and a projection lens to guide the formed images onto a screen for viewing. The images will be two dimensional when the same image is formed for both eyes of the viewer, or alternatively, the images may be stereoscopic when different images are formed for the left eye and the right eye of the viewer.

The term "Diode Pumped Solid State" (DPSS) describes a class of laser that uses pump laser diodes to illuminate one or more lasing crystals. The pump laser diodes are typically infrared (IR) laser diodes that have long life and high efficiency. The lasing crystals absorb the pump light and re-emit light which may be at a different IR wavelength. By combining many pump laser diodes and multiple crystals, the optical power of the output laser beam may be increased to very high levels. Each crystal may be considered one gain stage. An optical Q-switch is used to modulate the "quality" of the laser resonance cavity and therefore build up power in the crystal before each pulse discharges the power in an optical pulse of light. DPSS lasers are typically pulsed at a rate of 10,000 to 300,000 Hz with pulse widths in the range of 10 to 50 nS. 10 to 200 W of optical power may be achieved with 1 to 5 gain stages. The pump diodes may be operated in continuous wave (CW) mode or may in quasi-continuous wave (QCW) mode. The wavelength of the pump diodes is selected to match absorption of the doping in the crystal being pumped.

After the IR beam is brought up to a high power level in one or more gain stages, the IR beam may be converted to visible light by using a optical doubling crystal made from a material with a high non-linear effect such as lithium niobate. The optical doubling crystal has the effect of doubling the frequency which halves the wavelength. In the case where the IR beam is formed from commonly available neodymium-doped yttrium vanadate (Nd:YVO4) crystals, the IR wavelength is at 1064 nm, and the doubled frequency forms green light with a wavelength of 532 nm. In the case where the IR beam is formed from ytterbium doped yttrium lithium fluoride (Yb:YLF) crystals, the IR wavelength is at 1047 nm, and the doubled frequency forms green light with a wavelength of 523.5 nm. The optical doubling crystal may be considered part of the DPSS laser, so that the DPSS laser emits a beam of green light after doubling. Commonly used pump wavelengths are 808 nm, 863 nm, or 880 nm for Nd:YLF crystals.

Another type of laser is the visible laser diode (LD). As opposed to the DPSS laser, the visible laser diode directly transforms electricity to visible laser light in a semiconductor crystal. Red and blue LDs are commonly available on the order of one Watt per LD whereas green LDs are currently available only in the milliwatt range. Multiple LDs may be aggregated together to form LD assemblies that can reach many tens of Watts or even hundreds of Watts. If LDs are operated in pulsed mode, such as at 50% duty cycle, higher average power may be generated than in continuous wave (CW) operation because the maximum power of many LDs is determined by the peak power, not the average power.

Spatial light modulators (SLMs) act as light valves to form individual pixels by determining the amount of light and therefore the brightness of each pixel. The x and y dimensions of the SLM map into the x and y dimensions of the resultant image. A variety of technologies may be used to form SLMs. Transmissive liquid crystal devices (LCD), liquid crystal on silicon (LCOS) devices, and digital micromirror devices (DMDs) are three of the most commonly used SLM(s). LCDs transmit light to form the desired image, whereas LCOS devices and DMDs reflect light to form the desired image.

To achieve color operation, three SLMs may be used such that one SLM is used for red, one for green, and one for red. Alternatively, time sequential color can be used by time sequencing red, green, and blue light so that it illuminates one SLM, with each color occurring at a different time. A timeline determines the percentage of each color. For example, to balance the colors to efficiently make white, a typical timeline is 25% red, 50% green, and 25% blue. The actual timeline depends on the wavelengths of each color.

Additional optical components may be necessary to bring three colors of light to the SLM(s) and to reject light that is not output to the viewing screen. LCDs and LCOS devices often use X-prisms, dichroic beamsplitters, and polarization beamsplitters to manipulate light beams. DMDs often use Philips prisms and total internal reflection (TIR) prisms to accomplish the same goals. Once the image is formed by the SLM(s), a projection lens transfers the image out to the plane of viewing screen. In the case of front projectors, the throw distance between the projector and the viewing screen can be 10 feet to 100 or more. In the case of rear projectors, the throw distance is usually on the order of 1 to 3 feet.

In the context of laser projection, laser speckle is a degradation of the visible image that is caused by the coherent properties of laser light. Constructive and destructive interference cause small spots with high and low intensity that make the image appear rough or grainy. Resolution may be adversely affected such that fine detail in the image is not visible. Green laser light is particularly subject to laser speckle because of the high photopic efficacy of green light and the high resolution of the human eye in the green band. Various despeckling techniques may be used to reduce speckle. These techniques generally fall into three categories: path length diversity, wavelength diversity, and polarization diversity. Red and blue laser light tend to have less speckle than green laser light, so minimal despeckling may be appropriate depending on the desired image quality.

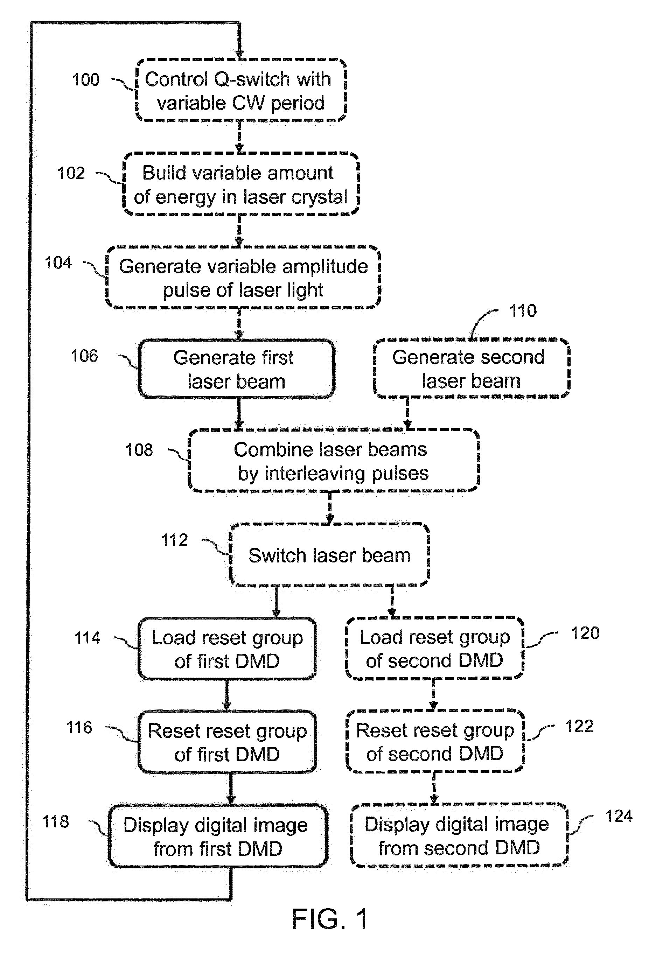

FIG. 1 shows a flowchart of a laser display method and system which has a number of novel parts that will be explained in the following description. In optional steps 100 through 104, a variable amplitude laser pulse is formed. In step 100, a Q-switch is controlled with a variable continuous-wave (CW) period. In step 102, a variable amount of energy is built up in a laser crystal. In step 104, a variable amplitude pulse of laser light is generated. In step 106, the pulse from step 104 is used to generate a first laser beam. In optional steps 110 through 112, a second laser beam is combined with the first laser beam. In step 110, a second laser beam is formed. In step 108, the laser beams from step 106 and 110 are combined by interleaving pulses in time. In step 112, the combined laser beam is switched in time to form two laser beams. In step 114, one of the switched laser beams is directed to a first DMD, and a reset group of the first DMD is loaded with data. In step 116, the reset group of the first DMD is reset. In step 118, a digital image is displayed from the first DMD. In optional steps 120 through 124, a second DMD is utilized. In step 120, the other switched laser beam is directed to a second DMD, and a reset group of the second DMD is loaded with data. In step 122, the reset group of the second DMD is reset. In step 124, a digital image is displayed from the second DMD. Steps 100 through 118 (and optionally steps 120 through 124) are repeated to generate a stream of laser light pulses that form digital images from one or two DMDs.

In one aspect of the laser display method and system shown in FIG. 1, a dual 1-DMD architecture efficiently utilizes a laser light source by switching the laser light between the dual DMDs.

Since DPSS lasers are typically pulsed at frequencies higher than 10,000 Hz and frequencies less than 10,000 Hz are necessary for best operation with a single DMD, it is advantageous to simultaneously operate a DPSS laser at higher than 10,000 Hz while switching the laser between two DMD channels at a frequency less than 10,000 Hz. This architecture forms a dual 1-DMD projector rather than the 3-DMD projector that is conventionally used for digital cinema or other applications where high image quality requirements do not allow the use of a single 1-DMD projector.

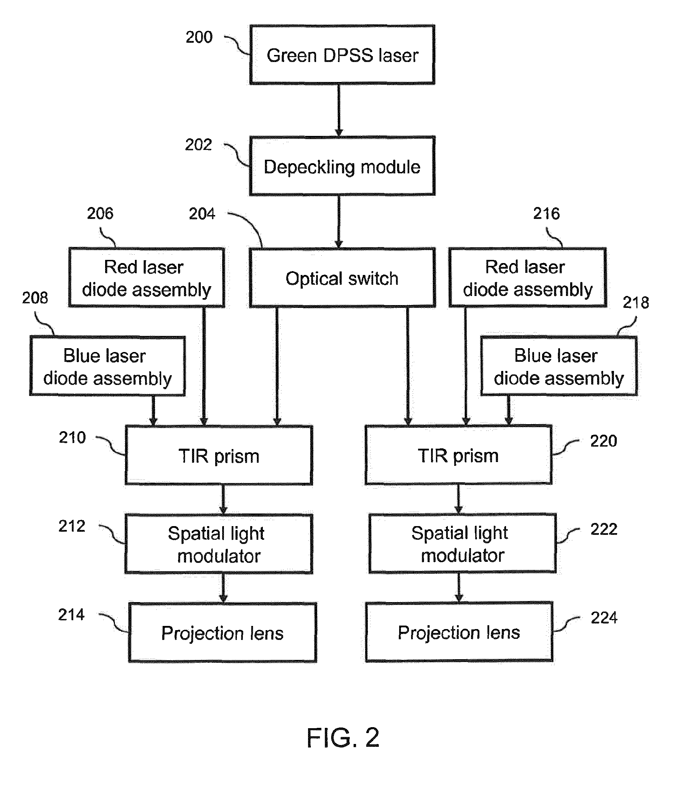

FIG. 2 shows a block diagram of a laser projector architecture that efficiently makes use of a green DPSS laser by switching the green laser light between two SLMs. Green DPSS laser 100 generates a green beam of laser light. Despeckling module 202 reduces the speckle of the green beam of laser light. Optical switch 204 switches the green beam of laser light in time so that it alternately illuminates TIR prism 210 and TIR prism 220. Red laser diode assembly 206 and blue laser diode assembly 208 also illuminate TIR prism 210. The combined light from TIR prism 210 illuminates SLM 212. Depending on the type of SLM, light may be transmitted through or reflected from SLM 212 and then passes through projection lens 214. Red laser diode assembly 216 and blue laser diode assembly 218 also illuminate TIR prism 220. The combined light from TIR prism 220 illuminates SLM 222. Depending on the type of SLM, light may be transmitted through or reflected from SLM 222 and then passes through projection lens 224.

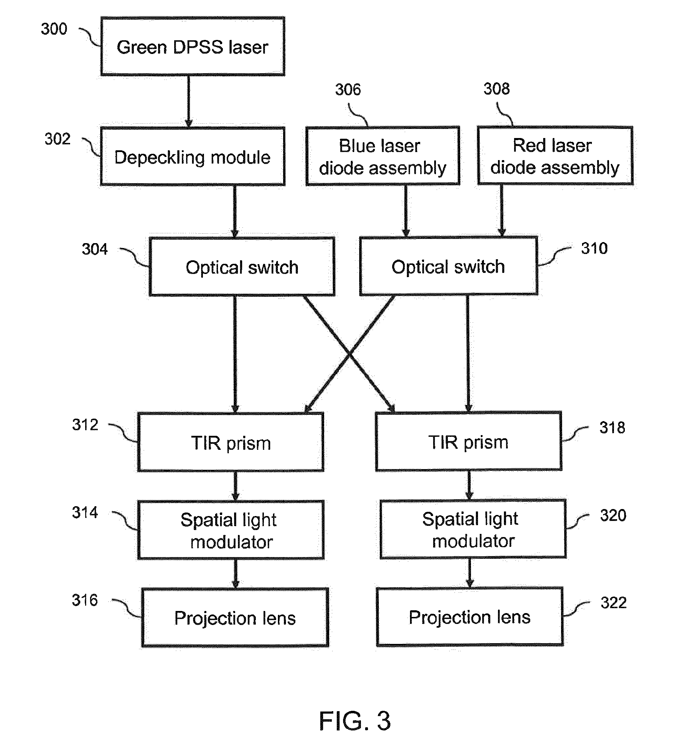

FIG. 3 shows a block diagram of an alternate laser projector architecture that efficiently makes use of a green DPSS laser by switching the green laser light between two SLMs. In this case, fewer red and blue laser diode assemblies are used because the red and blue laser diode assemblies are also switched between two SLMs. Green DPSS laser 300 generates a green beam of laser light. Despeckling module 302 reduces the speckle of the green beam of laser light. Optical switch 304 switches the green beam of laser light in time so that it alternately illuminates TIR prism 312 and TIR prism 318. Red laser diode assembly 306 and blue laser diode assembly 308 are switched by optical switch 310 so that they also alternately illuminate TIR prism 312 and TIR prism 318. The combined light from TIR prism 312 illuminates SLM 314. Depending on the type of SLM, light may be transmitted through or reflected from SLM 314 and then passes through projection lens 316. The combined light from TIR prism 318 illuminates SLM 320. Depending on the type of SLM, light may be transmitted through or reflected from SLM 320 and then passes through projection lens 322.

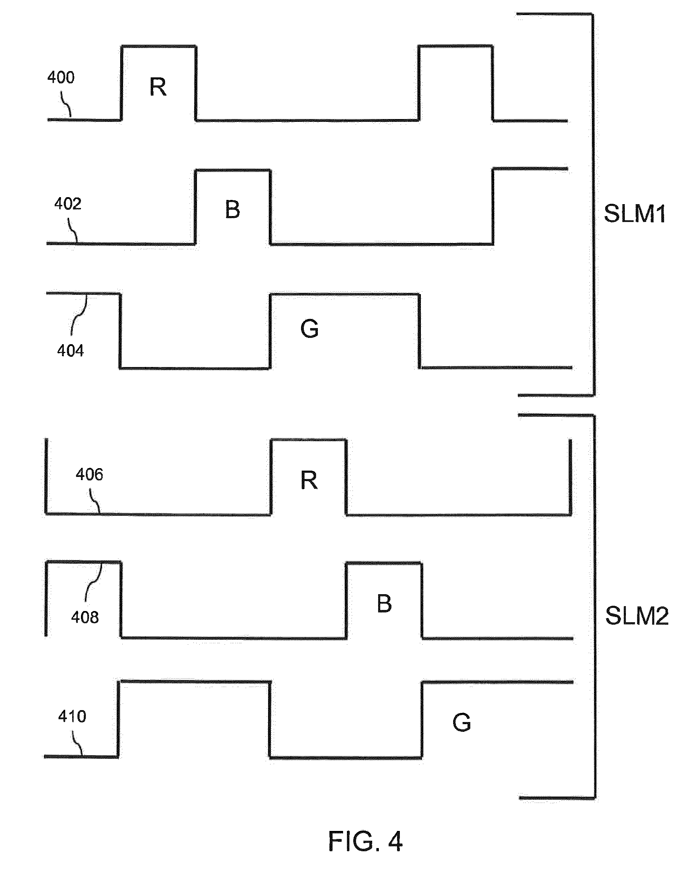

FIG. 4 shows a timing diagram of a laser projector architecture that efficiently uses DPSS laser light. This timing diagram may be utilized by the laser architectures shown in FIG. 2 and FIG. 3. In a system with two SLMs, curves 400, 402, and 404 show on and off states for one SLM (SLM1), and curves 406, 408, and 410 show on and off states for the other SLM (SLM2). On states are designated by high parts of curves 400, 402, 404, 406, 408, and 410. Off states are designated by low parts of curves 400, 402, 404, 406, 408, and 410. Curve 400 shows the red timing sequence for SLM1, curve 402 shows the blue timing sequence for SLM1, and curve 404 shows the green timing sequence for SLW1. In this example, red only is on 25% of the time, blue only is on 25% of the time, and green only is on 50% of the time for SLM1. Curve 406 shows the red timing sequence for SLM2, curve 408 shows the blue timing sequence for SLM2, and curve 410 shows the green timing sequence for SLW2. Red only is on 25% of the time, blue only is on 25% of the time, and green only is on 50% of the time for SLM2. Curve 404 and curve 410 are 180 degrees out of phase. The phases of curve 400, 402, 406, and 408 are arranged so that SLM1 and SLM2 are alternately illuminated by red and blue light while they are not being illuminated by green light.

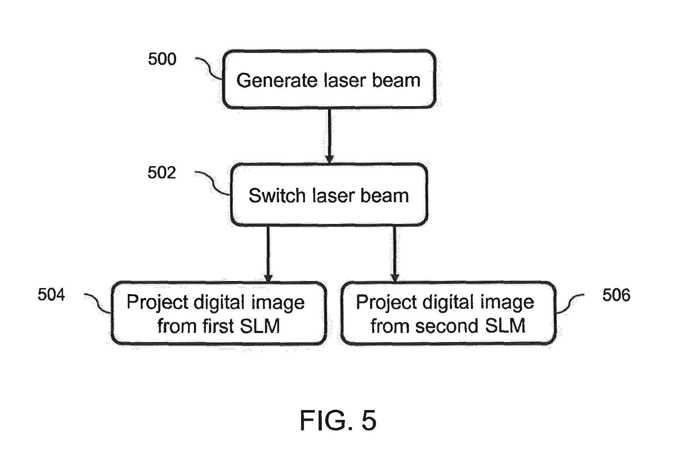

FIG. 5 shows a flowchart of a laser projection architecture that efficiently uses DPSS laser light. In step 500, a laser beam is generated. In step 502, the laser beam is switched. In step 504, a first SLM projects a first digital image. In step 506, a second SLM projects a second digital image. In the case of two dimensional projection, the first image and the second image may be substantially the same. In the case of three dimensional projection, the two images may be substantially different and the first image may be directed to one eye of the viewer whereas the second image may be directed to the second eye of the viewer.

Laser beams may be switched between two optical paths using optical switches that are based on mechanical devices such as rotating mirrors or shutters, acousto-optical modulators, or electro-optical modulators. The switching frequency may be approximately 1000 Hz or in the range of 100 to 10,000 Hz.

For spatial light modulators based on DMD technology, algorithms called bit sequences are typically used to modulate the intensity of each bit at predefined time intervals. In the case of a single 3-DMD projector, the limited bandwidth of the electronics and DMDs mean that even the possible bit sequences generate visible image artifacts such as dithering. Using a dual 1-DMD projector can reduce or completely eliminate these artifacts at similar or lower cost. Also, the resolution of the dual 1-DMD projector can be higher than the single 3-DMD projector, if the two chips in the dual 1-DMD projector are aligned in a staggered fashion such that the dual images are formed one half pixel apart. Other image quality parameters of the dual 1-DMD architecture, such as brightness and contrast, may also be close to or even better than the single 3-DMD architecture.

The dual 1-DMD architecture may also be employed for stereoscopic viewing by polarizing the light either before or after the DMDs. Other DPSS colors in addition to green or instead of green, may be switched between multiple DMDs. The laser light sources may be switched between more than two DMDs. For example, green laser light may be switched between two optical blocks where each optical block has a TIR prism, a Philips prism, and three DMDs. Other time sequences instead of 25/25/50 may be advantageous. The time sequence may be phased in various ways to maximize the performance of the laser light sources. For example, the colors may be phased so that they overlap.

In another aspect of the laser display method and system shown in FIG. 1, multiple sources of laser light are combined to achieve high pulse frequencies that allow high bit depth.

DPSS lasers may be designed in a master-oscillator power amplifier (MOPA) configuration or a high power oscillator (HPO) configuration. In the MOPA configuration, there is a low-power master oscillator and then multiple gain stages that bring the power up to a high level with more optical power added in each gain stage. In the HPO configuration, there is one oscillator that runs at high power. Hybrid configurations may include an HPO and one or more gain stages. MOPA configurationscan typically run up to high pulse frequencies which may be in the range of 50 to 100 kHz or higher while still maintaining high power output. HPO configurations are typically limited to lower pulse frequencies in the range of 10 to 80 kHz. Pulse widths for both configurations are typically in the range of 10 to 50 nS. 10 to 200 W of optical power may be achieved with 1 to 5 gain stages in the MOPA configuration. 25 to 75 W of optical power may be achieved with no additional gain stages in the HPO configuration. The material of the crystals in the gain stages has an effect on the optimum design ranges for pulse frequencies, pulse widths, and achievable optical power outputs.

In the MOPA configuration, the IR beam is brought up to a high power level in one or more gain stages and then the IR beam may be converted to visible light by using a optical doubling crystal made from a material with a high non-linear effect such as lithium niobate. The optical doubling crystal has the effect of doubling the frequency which halves the wavelength. In the case where the IR beam is formed from commonly available neodymium-doped yttrium aluminum garnet (Nd:YAG) crystals or neodymium-doped yttrium vanadate (Nd:YVO4) crystals, the IR wavelength is at 1064 nm, and the doubled frequency forms green light with a wavelength of 532 nm. In the case where the IR beam is formed from ytterbium doped yttrium lithium fluoride (Yb:YLF) crystals, the IR wavelength is at 1047 nm, and the doubled frequency forms green light with a wavelength of 523.5 nm. The optical doubling crystal may be considered part of the DPSS laser, so that the DPSS laser emits a beam of green light after doubling.

In the HPO configuration, a doubling crystal may be incorporated into the HPO cavity (intracavity doubling) to form visible light. Intracavity doubling has the potential to be convert IR light to visible light more efficiently than external cavity doubling because there are multiple passes of the IR light through the doubling crystal.

Since HPOs are typically pulsed at frequencies less than 30 kHz to get maximum power output and frequencies greater than 100 kHz are necessary for high bit depth operation with DMD-based projectors, it is advantageous to combine multiple HPOs by interleaving the pulses. This achieves the two goals of increasing the optical power and increasing the frequency of the combined beam.

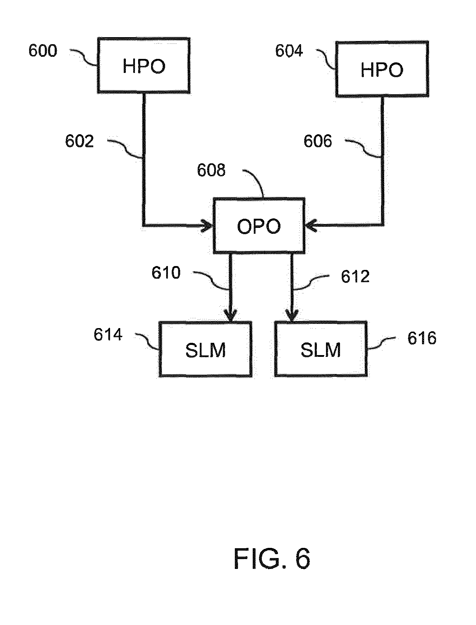

FIG. 6 shows a block diagram of an optical apparatus with two HPOs combined into one optical parametric oscillator (OPO). HPO 600 generates light beam 602, and HPO 604 generates light beam 606. OPO 608 combines light beam 602 and light beam 606 to generate light beam 610 and light beam 612. Light beam 610 illuminates spatial light modulator (SLM) 614, and light beam 612 illuminates SLM 616. Light beams 602, 606, and 610 may be green light beams. OPO 608 may have an intracavity frequency doubler. Light beam 612 may be a red light beam. Light beam 610 may have interleaved pulses from light beam 602 and light beam 606.

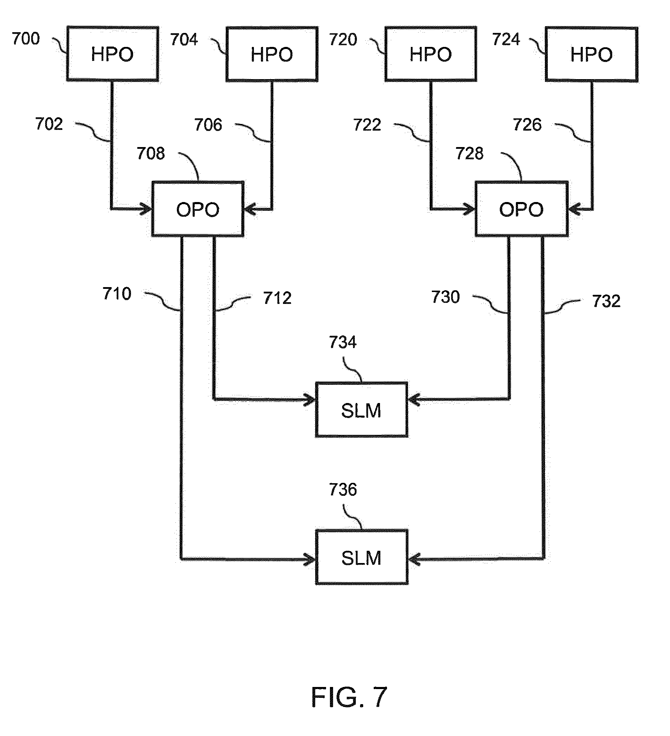

FIG. 7 shows a block diagram of an optical apparatus with four HPOs combined into two OPOs. HPO 700 generates light beam 702, and HPO 704 generates light beam 706. OPO 708 combines light beam 702 and light beam 706 to generate light beam 710 and light beam 712. Light beam 710 illuminates SLM 736, and light beam 712 illuminates SLM 734. HPO 720 generates light beam 722, and HPO 724 generates light beam 726. OPO 728 combines light beam 722 and light beam 726 to generate light beam 730 and light beam 732. Light beam 732 illuminates SLM 736, and light beam 730 illuminates SLM 734. Light beams 702, 706, 722, 726, 710, and 732 may be green light beams. OPO 708 and OPO 728 may have intracavity frequency doublers. Light beams 712 and 730 may be a red light beams. Light beam 710 may have interleaved pulses from light beam 702 and light beam 706. Light beam 732 may have interleaved pulses from light beam 722 and light beam 726.

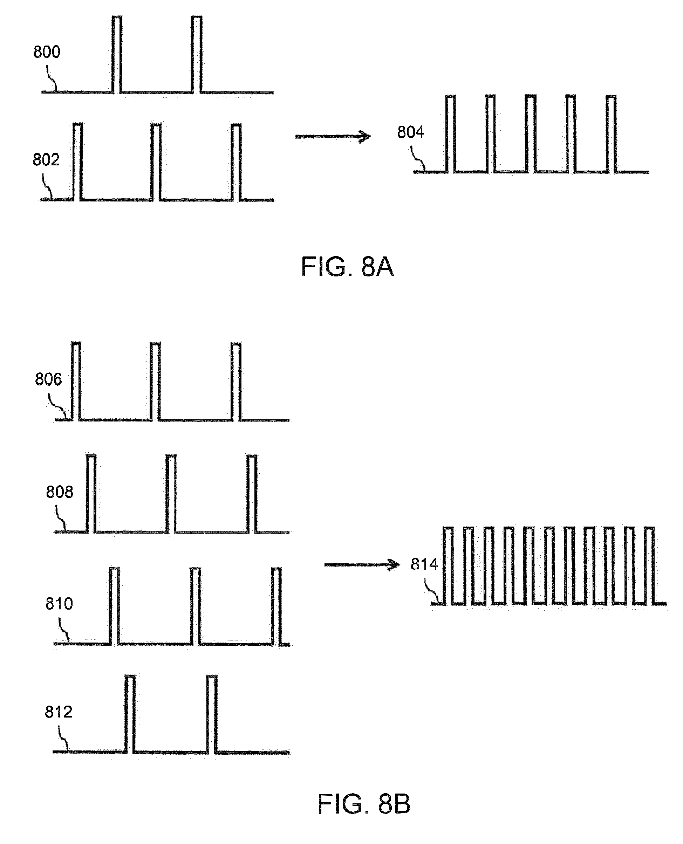

FIG. 8A shows a timing diagram of an optical apparatus with two HPOs. Curve 800 represents a series of light pulses from one HPO, and curve 802 represents a series of light pulses from a second HPO. When combined together, curve 800 and curve 802 form curve 804 which represents an interleaved series of light pulses. Curves 800 and 802 may each have light pulses at a frequency of 25 kHz. Curve 804 may therefore have light pulses at a frequency of 50 kHz.

FIG. 8B shows a timing diagram of an optical apparatus with four HPOs. Curve 806 represents a series of light pulses from one HPO, and curve 808 represents a series of light pulses from a second HPO, curve 810 represents a series of light pulses from third HPO, and curve 812 represents a series of light pulses from a fourth HPO. When combined together, curves 806, 808, 810, and 812 form curve 814 which represents an interleaved series of light pulses. Curves 806, 808, 810, and 812 may each have light pulses at a frequency of 25 kHz. Curve 814 may therefore have light pulses at a frequency of 100 kHz.

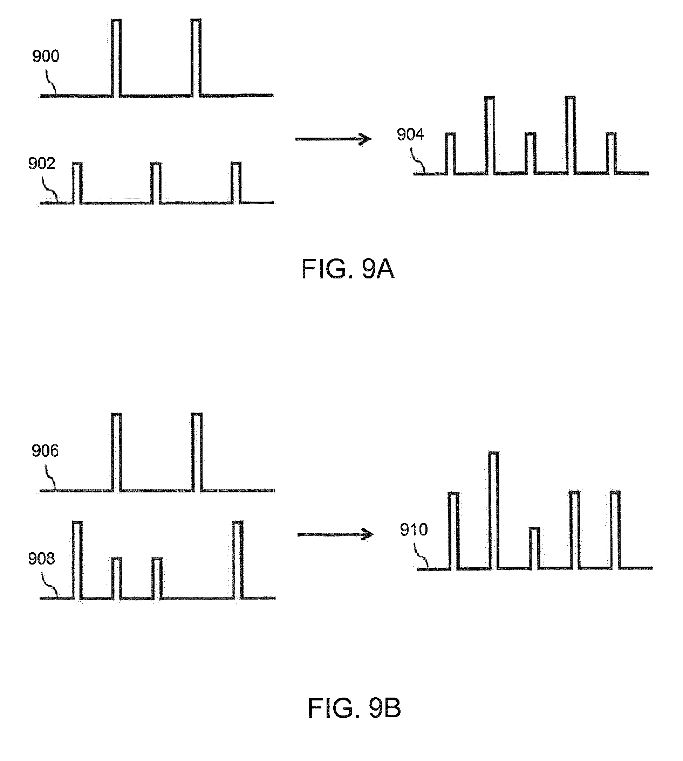

FIG. 9A shows a timing diagram of an optical apparatus with two HPOs that have different pulse amplitudes. Curve 900 represents a series of light pulses from one HPO with full amplitude, and curve 902 represents a series of light pulses from a second HPO which generates half the full amplitude. When combined together, curve 900 and curve 902 form curve 904 which represents an interleaved series of light pulses where some peaks have full amplitude and some peaks have half amplitude. Curves 900 and 902 may each have light pulses at a frequency of 25 kHz. Curve 904 may therefore have light pulses at a frequency of 50 kHz. An SLM may preferentially select the full amplitude peaks or the half amplitude peaks as desired.

FIG. 9B shows a timing diagram of an optical apparatus with two HPOs where one HPO has an irregular hold-off time. Curve 906 represents a series of light pulses from one HPO with full amplitude, and curve 908 represents a series of light pulses from a second HPO which generates some peaks with full amplitude and some peaks with half the full amplitude. When combined together, curve 906 and curve 908 form curve 910 which represents an interleaved series of light pulses where some peaks have full amplitude and some peaks have half amplitude. Curve 906 may have light pulses at a frequency of 25 kHz. Curve 908 may have irregular pulses that have a frequency that varies between 25 kHz and 50 kHz. The phases of curves 906 and 908 may be adjusted such that some of the peaks from curve 906 add to some of the peaks from curve 908 in order to make curve 910 have light pulses at a frequency of 50 kHz. Curve 910 has peaks with extra large amplitude, full amplitude, and half amplitude. An SLM may preferentially select the extra large amplitude peaks, full amplitude peaks, or half amplitude peaks as desired. Curve 908 may be produced by triggering an HPO at an irregular hold off time such that half amplitude peaks are generated when the trigger occurs early.

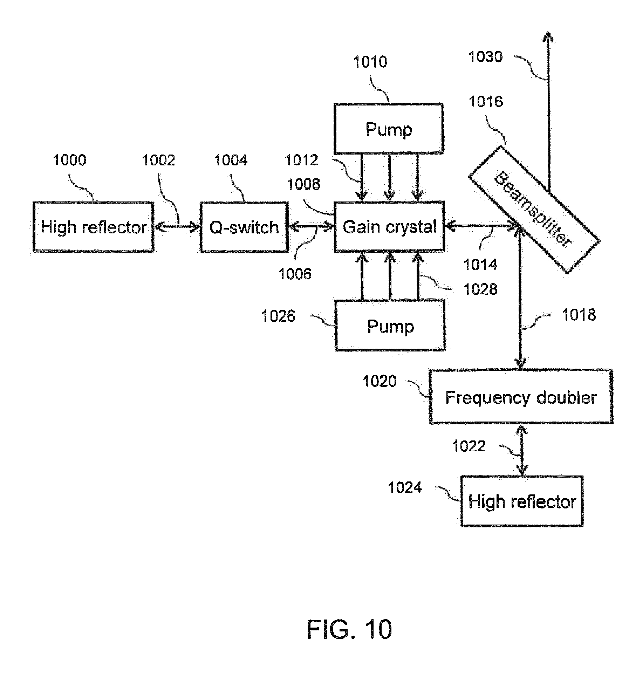

FIG. 10 shows a block diagram of an HPO. An IR light beam resonates between high reflectors 1000 and 1024. The resonating IR beam includes light beams 1002, 1006, 1014, 1018, and 1022. Q-switch 1004 switches the Q of the cavity formed by high reflectors 1000 and 1024 such that gain crystal 1008 alternately builds up and releases energy from pump light beams 1012 and 1028. IR pump diode array 1010 generates pump light beam 1012 and IR pump diode array 1026 generates pump light beam 1028. Frequency doubler 1020 doubles the wavelength of light beams 1018 and 1022 to generate visible light which is superimposed on light beams 1018 and 1022. Beamsplitter 1016 has high transmission for visible light which exits the cavity as light beam 1030. Beamsplitter 1016 has high reflectance for IR light which is trapped in the cavity formed by high reflectors 1000 and 1024. The net effect of the HPO in FIG. 10 is to convert the IR pump light to visible light. Frequency doubler 1020 may be a green frequency doubler in which case light beam 1030 may be fixed at a wavelength that makes a green light beam. There may be a various lenses and apertures to guide the beam through the HPO. For example, there may be a lens and an aperture between high reflector 1000 and Q-switch 1004, there may be an aperture between beamsplitter 1016 and frequency doubler 1020. There may also be a polarizing beamsplitter and rotatable waveplate to adjust the amount of light generated by the HPO. The polarizing beamsplitter and rotatable waveplate may be located between gain crystal 1008 and beamsplitter 1016.

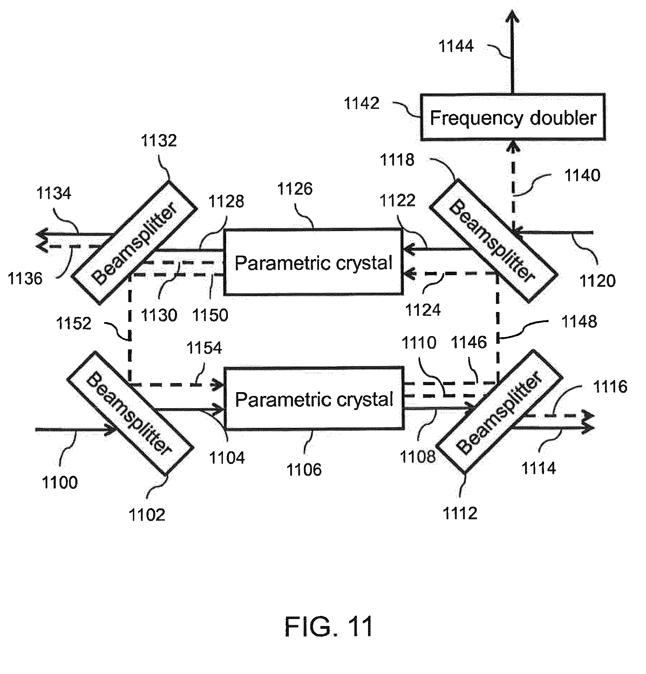

Conventional OPOs have one parametric crystal and one input light beam. FIG. 11 shows a block diagram of an OPO with two parametric crystals 1106 and 1126 and two input light beams 1100 and 1120. Input light beam 1100 passes through beamsplitter 1102 to form light beam 1104. Light beam 1104 passes through parametric crystal 1106. Parametric crystal 1106 has a nonlinear effect on light beam 1104 to form light beam 1108, light beam 1110, and light beam 1146. Light beam 1108 passes through beamsplitter 1112 to form output light beam 1114. Light beam 1110 also passes through beamsplitter 1112 to form light beam 1116. Light beam 1146 reflects from beamsplitter 1112 to form light beam 1148. A portion of light beam 1148 passes through beamsplitter 1118 to form light beam 1140, and a portion of light beam 1148 reflects from beamsplitter 1118 to form beamsplitter 1124. Light beam 1140 passes through frequency doubler 1142 to form output light beam 1144. Light beam 1124 passes through parametric crystal 1126 to combine with light beam 1150. Input light beam 1120 passes through beamsplitter 1118 to form light beam 1122. Light beam 1122 passes through parametric crystal 1126. Parametric crystal 1126 has a nonlinear effect on light beam 1122 to form light beam 1128, light beam 1130, and light beam 1150. Light beam 1128 passes through beamsplitter 1132 to form output light beam 1134. Light beam 1130 also passes through beamsplitter 1132 to form light beam 1136. Light beam 1150 reflects from beamsplitter 1132 to form light beam 1152. Light beam 1152 reflects from beamsplitter 1102 to form light beam 1154. Light beam 1154 passes through parametric crystal 1106 to combine with light beam 1146.

In FIG. 11, visible light beams are shown with solid lines and IR light beams are shown with dashed lines. Light beams 1104 and 1154 are drawn as separate beams for clarity but may be substantially coincident. Likewise, light beams 1108, 1110, and 1146 may be substantially coincident, light beams 1122 and 1124 may be substantially coincident, and light beams 1128, 1130, and 1150 may be substantially coincident. Beamsplitters 1112 and 1134 have optical coatings which transmit the visible light beams while reflecting one of the IR beams and transmitting the other IR beam. Beamsplitter 1118 transmits the visible light beam and partially transmits and partially reflects the IR beam. Beamsplitter 1102 transmits the visible light beam and reflects the IR beam. The net effect of the OPO in FIG. 11 is to accept two input visible beams and output an IR beam which is then converted to visible light by the frequency doubler. Input light beams 1100 and 1120 may fixed at a wavelength that makes green light beams. Frequency doubler 1142 may be a red frequency doubler in which case light beam 1144 may be fixed at a wavelength that makes a red light beam. FIG. 11 shows a singly resonant OPO design with only one IR wavelength circulating in the resonant cavity. If light beam 11110 is reflected from beamsplitter 1112 and light beam 1136 is reflected from beamsplitter 1132, a doubly resonant OPO results which is has two IR wavelengths circulating in the resonant cavity.

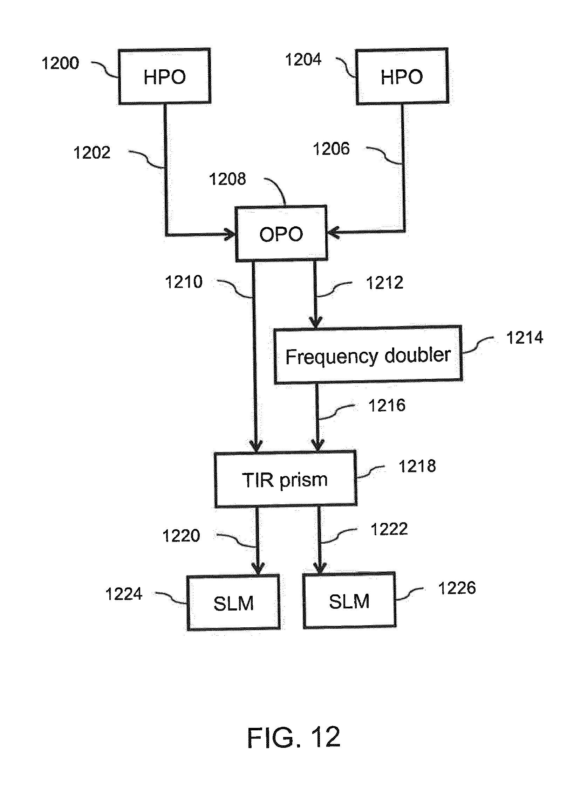

FIG. 12 shows a block diagram of a laser projector with two HPOs. HPO 1200 generates light beam 1202, and HPO 1204 generates light beam 1206. OPO 1208 combines light beam 1202 and light beam 1206 to generate light beam 1210 and light beam 1212. Light beam 1212 illuminated frequency doubler 1214. Frequency doubler 1214 doubles the frequency of light beam 1212 to form light beam 1216. Light beam 1210 and light beam 1216 illuminate TIR prism 1218. TIR prism 1218 forms light beam 1220 and light beam 1222. Light beam 1220 illuminates SLM 1224. Light beam 1222 illuminates SLM 12212. Light beams 1202, 1206, and 1210 may be green light beams. Light beam 1212 may be an IR light beam. Light beam 1216 may be a red light beam. Light beam 1210 may have interleaved pulses from light beam 1202 and light beam 1206. HPO 1200 and HPO 1204 may be DPSS light sources. SLM 1224 and SLM 1227 may be DMDs.

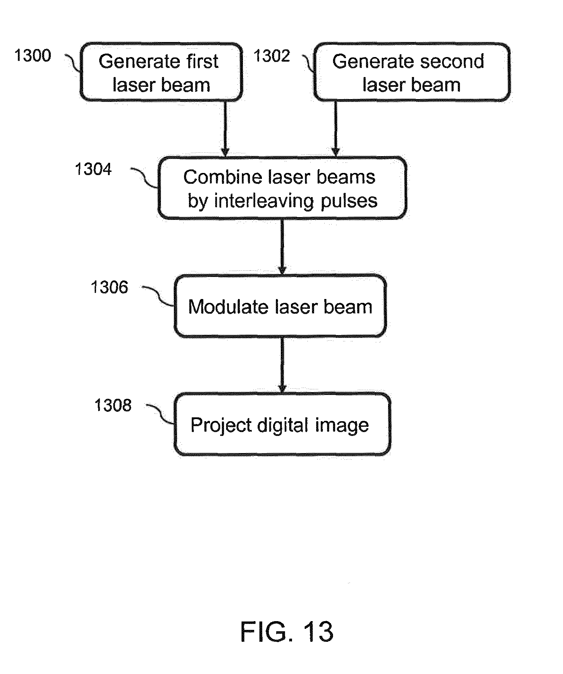

FIG. 13 shows a flowchart of a method of interleaving pulses from two laser beams and modulating the interleaved beam. In step 1300, a first laser beam at a fixed wavelength is generated. In step 1302, a second laser beam at the same fixed wavelength is generated. In step 1304, the first laser beam is combined with the second laser beam by interleaving pulses. In step 1306, the laser beam is modulated with an SLM. In step 1308, a digital image is projected with the SLM.

A detailed description of OPOs may be found in US Patent No. 5,740,190. The wavelengths of the pump, signal, and idler beam are related by the following mathematical expression: 1/λₚ = 1/λₛ + 1/λᵢ, where λₚ is the wavelength of the pump beam, 1/λₛ is the wavelength of the signal beam, and 1/λᵢ is the wavelength of the idler beam. The wavelengths also depend on various parameters of the crystal such as its size, orientation, and temperature. Some of the requirements for high efficiency conversion include phase matching, good beam quality, and sufficiently high beam density. Q-switched lasers may be used achieve sufficient beam density by using short pulses and low duty cycles. To provide one example, the OPO may be an x-cut lithium triborate (LBO) crystal with noncritical phase matching and temperature controlled at 134.7 degrees Celsius to obtain signal and idler beams at 898 nm and 1252 nm. In another example, if the temperature is controlled to 135.9 degrees Celsius the signal and idler beam may be at 904 nm and 1242 nm. In FIG. 11, the frequency doubler is shown outside the OPO cavity. Alternatively, the frequency doubler may be inside the OPO cavity.

Additional optical components may be necessary to bring three colors of light to the SLM(s) and to reject light that is not output to the viewing screen. Red, green, and blue light beams may be split or combined with various optical components. LCDs and LCOS devices often use X-prisms, dichroic beamsplitters, and polarization beamsplitters to manipulate light beams. DMDs often use Philips prisms and total internal reflection (TIR) prisms to accomplish the same goals. The wavelength of blue light is generally considered to be in the range of approximately 400 to 480 nm, green light is generally in the range of approximately 510 nm to 560 nm, and red light is generally in the range of approximately 590 to 700 nm. Once the image is formed by the SLM(s), a projection lens transfers the image out to the plane of viewing screen. In the case of front projectors, the throw distance between the projector and the viewing screen can be 10 feet to 100 or more. In the case of rear projectors, the throw distance is usually on the order of 1 to 3 feet.

For spatial light modulators based on DMD technology, algorithms called bit sequences are typically used to modulate the intensity of each bit at predefined time intervals. The bit sequences are performed by specialized electronic boards that are typically incorporated into the projector. Bit depth is a term that explains how many bits can be displayed on the screen. For example, conventional cinema grade bit sequences and electronics with continuous light sources can support 10 bits of actual linear bit depth (16 bits of apparent linear bit depth)when time and space dithering is used). For pulsed light sources, the bit is a function of the frequency of the light pulses. Higher frequency light pulses allow higher bit depth. In particular, 100 kHz reaches parity with existing continuous lamp sources such as the xenon lamps that are commonly used in digital cinema projectors. If the frequency is doubled, an additional bit of bit depth can be supported.

The existing on-off optical contrast ratio for digital cinema projectors is approximately 2000:1. If the optical contrast ratio is doubled to 4000:1, an additional bit of bit depth is required to avoid contouring or other artifacts in dark grey images. By using high frequency pulses at more than approximately 100 kHz, additional bits can be added to avoid the artifacts. For conference room, home theater, or other projection systems that have less demanding requirements than digital cinema, pulse frequencies higher than approximately 50 kHz may be sufficient to avoid objectionable artifacts.

The optical apparatus shown in FIG. 6 is able to achieve 50 kHz pulse frequency if each of the two high power oscillators runs at 25 kHz. The optical apparatus shown in FIG. 7 is able to achieve 100 kHz pulse frequency if each of the four high power oscillators runs at 25 kHz. Other combinations of multiple high power oscillators running at different frequencies can be used to add up to the desired overall frequency of operation. For example five high power oscillators running at 20 kHz each may add to an overall pulse frequency of 100 kHz.

In addition to increasing pulse frequency, another way to increase bit depth is to make smaller amplitude pulses and then design a bit sequence to select the smaller pulses as desired to make the least significant bits. For example, if half amplitude pulses are available, the bit sequence can achieve twice the bit depth at the same pulse frequency. Alternatively, constant bit depth can maintained at half the pulse frequency if half amplitude pulses are utilized. For digital cinema bit depth of 10 bits, a 50 kHz pulse frequency can be used instead of 100 kHz pulse frequency by utilizing half amplitude pulses. Extending this technique: one-quarter amplitude pulses allow the use of one-quarter pulse frequency, one-eighth amplitude pulses allow the use of one-eighth pulse frequency, etc.

To achieve n+1 redundancy with a single, fixed bit sequence, digital cinema can perform with 12 bit operation and 25 kHz for each HPO if one-quarter amplitude pulses are utilized. This configuration allows all the HPOs to be the same and does not depend on interleaving of pulses. If one or more HPOs fail, the total power is decreased, but the system can still run with the same bit depth.

Normal operation of HPOs is based on regular pulses with a fixed hold-off time between pulses. Small amplitude pulses may be generated in an HPO by changing the hold-off time between pulses. For example, the hold-off time is normally equal to the pulse period of 40 microseconds for a 25 kHz pulse frequency. If a pulse is made at a hold-off time of 20 microseconds, the amplitude of that pulse will be approximately half the full amplitude. If a pulse is made at a hold-off time of 10 microseconds, the amplitude of the pulse will be approximately one-quarter the full amplitude. Non-linear conversion processes such as the conversion between IR and green may change this relationship so that generating half and quarter amplitude green pulses require different hold-off times than half and quarter the normal pulse period. After a small pulse is generated, there is no requirement to wait an extra period of time to bring subsequent pulses back into synchronization with the original pulse timing. If a non-linear despeckling method is used, the small pulses may not be despeckled as much as full amplitude pulses. Since low brightness speckle is generally not visible to the human eye, a non-linear despeckling may still be feasible with small amplitude pulses.

In addition to interleaved pulses and small pulses, another way to achieve high bit depth is to change the phase of pulses in time. This is called bit slewing. One or more HPOs can be slewed at a known rate or in a predictable pattern and the associated bit sequence selects a small number of pulses in order to reach low brightness levels for the least significant bits.

Increasing spectral diversity is one of the conventionally known methods of reducing speckle. Multiple HPOs at different wavelengths may be combined to increase spectral diversity. For example, one HPO may be constructed with a Yb:YLF gain crystal to generate IR light at 1047 nm which may be doubled to produce green light at 523.5 nm and combined with a second HPO which may be constructed with a Nd:YAG gain crystal to generate IR light at 1064 nm which may be doubled to produce green light at 532 nm. The combined system will have less speckle due to spectral diversity from two wavelengths instead of one. Additional spectral diversity may be added by generating Raman-shifted peaks from the primary peaks at 523.5 nm and 532 nm. Additional primary peaks may be added by including additional lasers with different gain crystals.

In another aspect of the laser display method and system shown in FIG. 1, variable amplitude laser pulses are formed to increase the bit depth of the image display system.

It is desirable to create laser pulses with variable amplitude at a fixed period which can be used with bit sequences to create high bit depth. Conventional Q-switch operation cannot be used to hold-off pulses for longer than a certain time period otherwise super-pulses are created with very large amplitude that can damage optical coatings or components that are not designed for such high peak powers. Instead of using hold-off time that builds higher and higher levels of stored energy, continuous wave (CW) periods of variable time can be used to create variable periods where the laser is letting out a low level of energy rather than storing it. This allows arbitrary generation of reduced amplitude pulses without regard to peak power limitations.

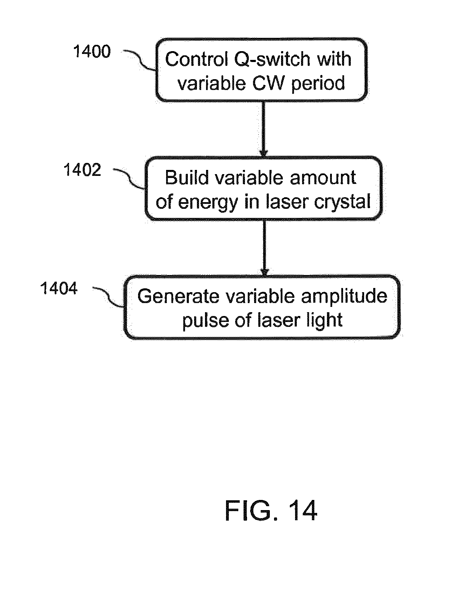

FIG. 14 shows a flowchart of a method of generating variable amplitude laser pulses. In step 1400, a Q-switch is controlled with a variable CW period of time. In step 1402, the variable period of time builds a variable amount of energy in a laser crystal. In step 1403, the variable amount of energy generates a variable-amplitude pulse of laser light.

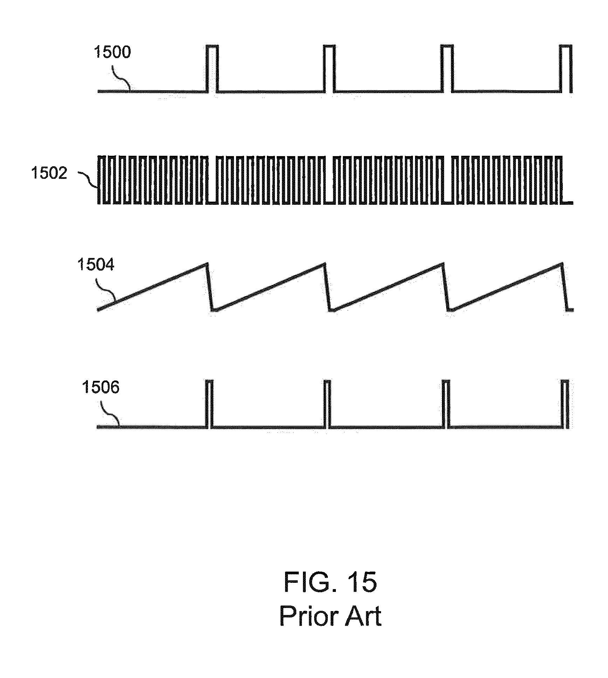

FIG. 15 shows a timing diagram of a prior art method of generating constant amplitude laser pulses. The horizontal axis represents time and the vertical axis represents amplitude of voltage or energy. In this conventional Q-switched configuration, timing pulses curve 1500 occur with a constant period. Timing pulses curve 1500 controls electrical circuitry to form radio-frequency (RF) curve 1502. RF curve 1502 controls a Q-switch to produce stored energy curve 1504 in a laser crystal. Stored energy curve 1504 generates laser pulse curve 1506. Timing pulses curve 1500 and RF curve 1502 are voltage waveforms, stored energy curve 1504 is an electrical energy waveform, and laser pulse curve 1506 is an optical energy waveform.

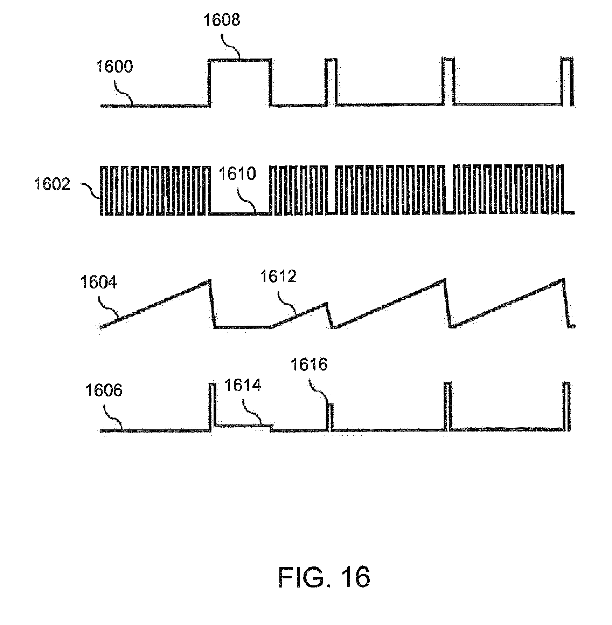

FIG. 16 shows a timing diagram of a method of generating half amplitude laser pulses. The horizontal axis represents time and the vertical axis represents amplitude of voltage or energy. In this Q-switched configuration, timing pulses curve 1600 has a usually constant period except for pulse 1608 that has a longer time period. Timing pulses curve 1600 controls electrical circuitry to form RF curve 1602 that has variable time period 1610 with no RF voltage. Variable time period 1610 determines the period of CW mode operation. RF curve 1602 controls a Q-switch to produce stored energy curve 1604 in a laser crystal that has variable energy peak 1612. Stored energy curve 1604 generates laser pulse curve 1606 that has a CW leakage period 1614 and a half amplitude variable laser pulse 1616. Timing pulses curve 1600 and RF curve 1602 are voltage waveforms, stored energy curve 1604 is an electrical energy waveform, and laser pulse curve 1606 is an optical energy waveform.

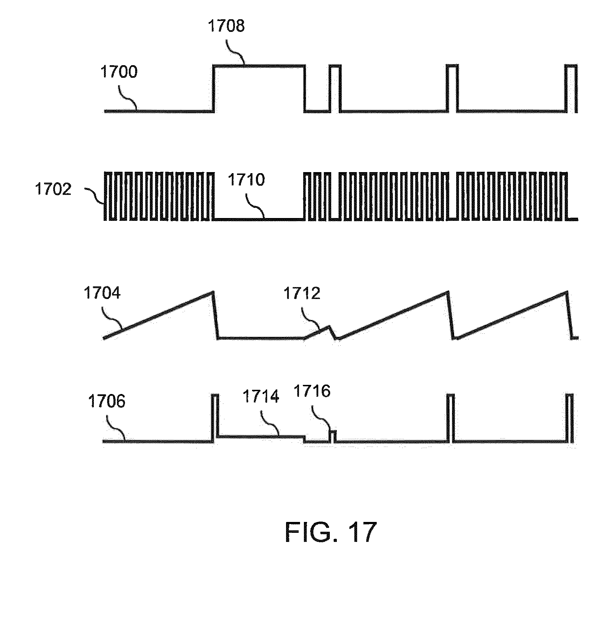

FIG. 17 shows a timing diagram of a method of generating quarter amplitude laser pulses. The horizontal axis represents time and the vertical axis represents amplitude of voltage or energy. In this Q-switched configuration, timing pulses curve 1700 has a usually constant period except for pulse 1708 that has a longer time period. Timing pulses curve 1700 controls electrical circuitry to form RF curve 1702 that has variable time period 1710 with no RF voltage. Variable time period 1710 determines the period of CW mode operation. RF curve 1702 controls a Q-switch to produce stored energy curve 17017 in a laser crystal that has variable energy peak 1712. Stored energy curve 1704 generates laser pulse curve 1706 that has a CW leakage period 1714 and a quarter amplitude variable laser pulse 1716. Timing pulses curve 1700 and RF curve 1702 are voltage waveforms, stored energy curve 1704 is an electrical energy waveform, and laser pulse curve 1706 is an optical energy waveform.

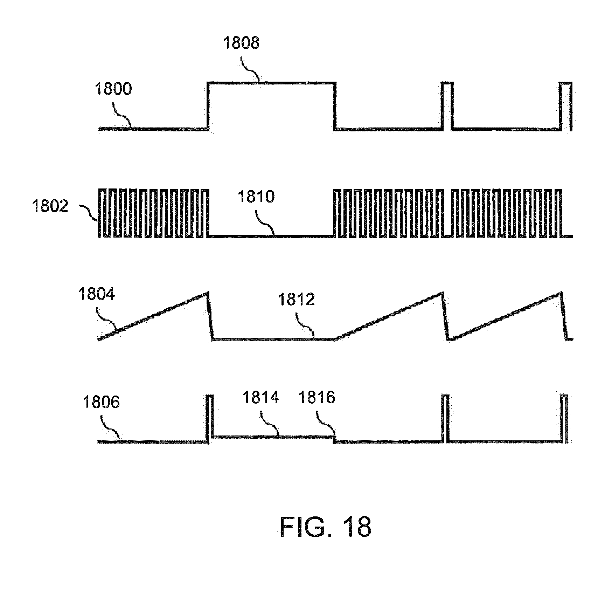

FIG. 18 shows a timing diagram of a method of skipping laser pulses. The horizontal axis represents time and the vertical axis represents amplitude of voltage or energy. In this Q-switched configuration, timing pulses curve 1800 has a usually constant period except for pulse 1808 that has a longer time period. Timing pulses curve 1800 controls electrical circuitry to form RF curve 1802 that has variable time period 1810 with no RF voltage. Variable time period 1810 determines the period of CW mode operation. RF curve 1802 controls a Q-switch to produce stored energy curve 1804 in a laser crystal that has a skipped energy peak 1812. Stored energy curve 1804 generates laser pulse curve 1806 that has a CW leakage period 1814 and a skipped variable laser pulse 1816. Timing pulses curve 1800 and RF curve 1802 are voltage waveforms, stored energy curve 1804 is an electrical energy waveform, and laser pulse curve 1806 is an optical energy waveform.

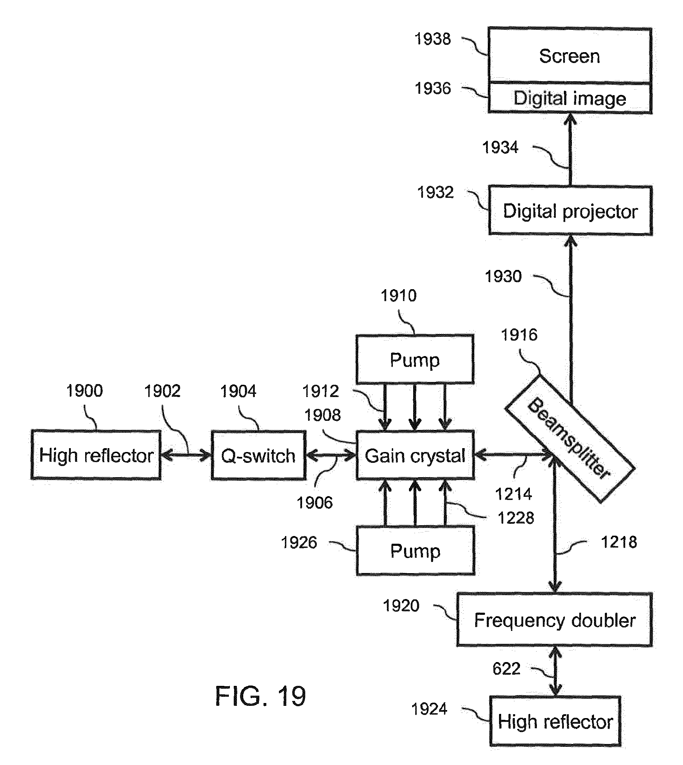

FIG. 19 shows a block diagram of a laser projector that uses variable amplitude laser pulses. An IR light beam resonates between high reflectors 1900 and 1924. The resonating IR beam includes light beams 1902, 1906, 1914, 1918, and 1922. Q-switch 1904 switches the Q of the cavity formed by high reflectors 1900 and 1924 such that gain crystal 1908 alternately builds up and releases energy from pump light beams 1912 and 1928. IR pump diode array 1910 generates pump light beam 1912 and IR pump diode array 1926 generates pump light beam 1928. Frequency doubler 1920 doubles the wavelength of light beams 1918 and 1922 to generate visible light which is superimposed on light beams 1918 and 1922. Beamsplitter 1916 has high transmission for visible light which exits the cavity as light beam 1930. Beamsplitter 1916 has high reflectance for IR light which is trapped in the cavity formed by high reflectors 1900 and 1924. Light beam 1930 is used by digital projector 1932 to form light beam 1934 which forms digital image 1936 on screen 1938.

High reflector 1900, Q-switch 1904, gain crystal 1908, pump 1910, beamsplitter 1916, frequency doubler 1920, high reflector 1924, and pump 1926 form a high power oscillator (HPO). The net effect of the HPO in FIG. 19 is to convert the IR pump light to visible light. Frequency doubler 1920 may be a green frequency doubler in which case light beam 1930 may be fixed at a wavelength that makes a green light beam. There may be a various lenses and apertures to guide the beam through the HPO. For example, there may be a lens and an aperture between high reflector 1900 and Q-switch 1904, there may be an aperture between beamsplitter 1916 and frequency doubler 1920. There may also be a polarizing beamsplitter and rotatable waveplate to adjust the amount of light generated by the HPO. The polarizing beamsplitter and rotatable waveplate may be located between gain crystal 1908 and beamsplitter 1916. Other colors of light such as blue, and red, may be supplied to digital projector 1932 by other light sources that are not shown.

High reflector 1900 or high reflector 1924 may purposely allow part of the IR light to leak out of the resonant cavity so that the IR power does not build up to damaging levels during the CW period. For example, one of the high reflectors may have an IR reflectance at the resonant wavelength of 95% to 99%. If the high reflector has a reflectance of less than 99%, more than 1% of the IR laser light is leaked out of the resonant cavity on each pass. To achieve the optimal combination of high efficiency and best resistance to damage, one the high reflectors may have an IR reflectance of 97% to 98%.

For some bit sequences, after a small pulse is generated, there is no requirement to wait an extra period of time to bring subsequent pulses back into synchronization with the original pulse timing. For other bit sequences, there may be a requirement to keep all pulses in synchronization so that the pulses are evenly spaced. The variable amplitude method using variable CW periods allows the pulses to stay evenly spaced when generating reduced amplitude pulses or skipped pulses. In other words, if there is a first full amplitude pulse, then a second pulse with variable amplitude, then a third pulse with full amplitude, the time period between the first and second pulses may be equal to the time period between the second and third pulses. In the case of a variable pulse that is completely eliminated to make a skipped pulse, the period between the first and third pulses may be twice the usual period of the regular full amplitude pulses.

In another aspect of the laser display method and system shown in FIG. 1, reset groups of the DMD are loaded and reset between optical pulses to avoid photoelectric upset artifacts.

Binary light modulators, such as DMDs, possess two states. One state, corresponding to a "zero," transmits no light. The other, corresponding to a "one," transmits light at the maximum intensity for whatever system is under consideration. In short, these modulators are off or on. As a result, only two discrete light levels exist at the viewer's eye, black and maximum brightness. Intermediate levels during pixel on/off are ignored as they are of relatively short duration. To achieve intermediate (similar to analog) levels of light as perceived by the viewer, pulse-width modulation (PWM) techniques are employed.

DMDs act as light valves to form individual pixels by determining the amount of light and therefore the brightness of each pixel. The x and y dimensions of the DMD map into the x and y dimensions of the resultant image. Algorithms called bit sequences are used to modulate the intensity of each bit at predefined time intervals. The bit sequences are controlled by specialized electronic boards that are typically incorporated into the projector.

DMDs utilize a multitude of bi-stable mirrors that normally land in a positive or negative direction determined by address and bias voltages applied to each mirror. The address and bias voltages create electrostatic attractions to pull the mirrors in the desired direction. The electrostatic attraction is proportional to the voltage difference between the mirror and the address electrode, and inversely proportional to the square of the distance between the mirror and the address electrode. Address is controlled by a complementary metal-oxide-semiconductor (CMOS) static random-access memory (SRAM) circuit which applies a relatively low voltage to either the positive or negative address electrode under each individual mirror. These address voltages are written to the CMOS SRAM array by high speed distribution circuits built into the DMDs. These address voltages cause the mirrors to tilt slightly but are not sufficient to make them fully land. Bias is applied to the mirrors themselves in large arrays called reset groups. Bias voltages are much larger than address voltages increasing the electrostatic pull sufficiently so that the mirrors land in their appropriate directions. Once landed, the mirror can be held in place by a small residual bias voltage because the mirror is so much closer to the electrode thus increasing the electrostatic attraction. In summary, address electrostatic attraction is created by CMOS memory circuits selecting the direction for the mirror to tilt, and bias electrostatic attraction causes the mirror to further rotate and land in the selected tilt direction. Residual bias holds the mirror in place and once held, the address voltage can be switched to a new condition without changing the mirror state. This is called mechanical memory or mirror latch.

A DMD bit sequence has a set of waveforms and timing patterns used to control the mirror switching in coordination with the loading of the SRAM arrays. DMD bit sequences are historically designed to generate the best combination of high efficiency and minimum digital artifacts in the generated image. The bit sequence quickly creates varying durations of mirror tilt in positive or negative directions to create the desired level of PWM grayscale for each pixel.

When very high energy light is applied to a CMOS SRAM circuit, photoelectric upset can occur which disrupts the circuit and essentially erases the memory condition. This type of photoelectric upset can occur from the very high amplitude pulses generated by some pulsed lasers. When used with conventional DMD bit sequences (created for non-pulsed light sources such as arc lamp or light-emitting diode illumination), a pulse can occur during a CMOS SRAM load and thus erase the correct data causing the mirrors to land in uncontrolled directions based on their previous state and other dynamic effects. This effectively destroys the PWM scheme and makes artifacts in the projected image.

If the bit sequence loads selected memories with new data, switches the mirrors to the new state and mechanically latches them in place before the next photoelectric pulse event, photoelectric upset effects are not able to degrade the projected image. This is done sequentially for each reset group until the entire array is loaded and latched. The bit sequence is designed to take into account the time between laser pulses, the load time of the specific DMD, plus the switching and settling time of mirrors. There are certain desired pulse repetition rates which work best for certain DMD types, but there may be several options based on the selection of reset groups to be loaded in between pulses. For example, a DMD which has 15 reset groups can be controlled with this sequence of events: first pulse, load data to 4 reset groups, reset mirrors to new state with mechanical latch, second pulse, repeat for next 4 groups, third pulse, repeat for next 4 groups, fourth pulse, repeat for last 3 groups. Another possible sequence of events is: first pulse, load data to 5 reset groups, reset mirrors to new state with mechanical, second pulse, repeat for next 5 groups, third pulse, repeat for last 5 groups. Additional possibilities can group in various other ways. Different size DMDs have different numbers of reset groups and different numbers of mirrors per group. Different bit sequence timing will be needed for each unique DMD, display frame rate, and laser repetition rate.

During a high-energy pulse event, all memory data is subject to being lost, so all mirrors must be mechanically latched in their proper display state with no data being loaded to any mirrors during the pulse event. Even though the above bit sequence examples are slightly less efficient at loading data than the best conventional bit sequences used in lamp-based displays, the additional few percent loss may be offset by the benefits of laser illumination. The use of occasional smaller laser pulses can improve the small bit weight performance of the display thus reducing the number of loads required for sufficient artifact reduction. This can mitigate the load-time efficiency loss caused by pausing data load during pulse events.

Higher laser pulse repetition frequency (PRF) limits the number of groups that can be loaded and reset before the next pulse so the above bit sequence examples are more efficient (from a DMD data loading perspective) with lower repetition rate lasers. The practical upper limit for cinema-grade DMD PRF is believed to be approximately 56 kHz which corresponds to approximately 18 microseconds between pulses. The upper limit for other types of DMDs will be determined by the specific digital design of each device. The practical lower limit for high-power, green DPSS laser PRF is approximately 5 kHz which corresponds to approximately 200 microseconds between pulses. The optimal range of PRF considering the DMD speeds and the best range of high-power, green DPSS laser operation is approximately 10 to 22 kHz which corresponds to approximately 45 to 100 microseconds between pulses. High-power green DPSS lasers generally have a pulse width of less than 50 nanoseconds which is short enough to allow high efficiency with a bit sequence that does not need to perform loading or resetting during the time of the light pulse.

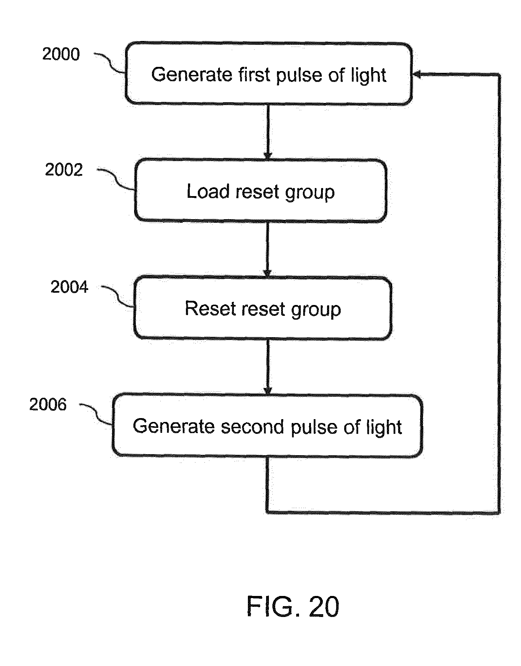

FIG. 20 shows a flowchart of a first timing method for pulsed-laser projection. In step 2000, a first pulse of light is generated. In step 2002, a stream of bit information is loaded into a reset group to produce a desired data state of a DMD. In step 2004, the same reset group is reset. In step 2006, a second pulse of light is generated. The process then goes back to step 2000 and cycles to continue generating light pulses and loading and resetting reset groups between the light pulses. No loads or resets take place between generating the first pulse of light in step 2000 and generating the second pulse of light in step 2006. First pulse of light 2000 and second pulse of light 2006 may be generated by a pulsed laser. More specifically, the pulsed light may be generated by a DPSS laser and/or may be green light. If there are no pulses of light between generation of first pulse of light 2000 and generation of second pulse of light 2006, these two steps may be combined into the same step.

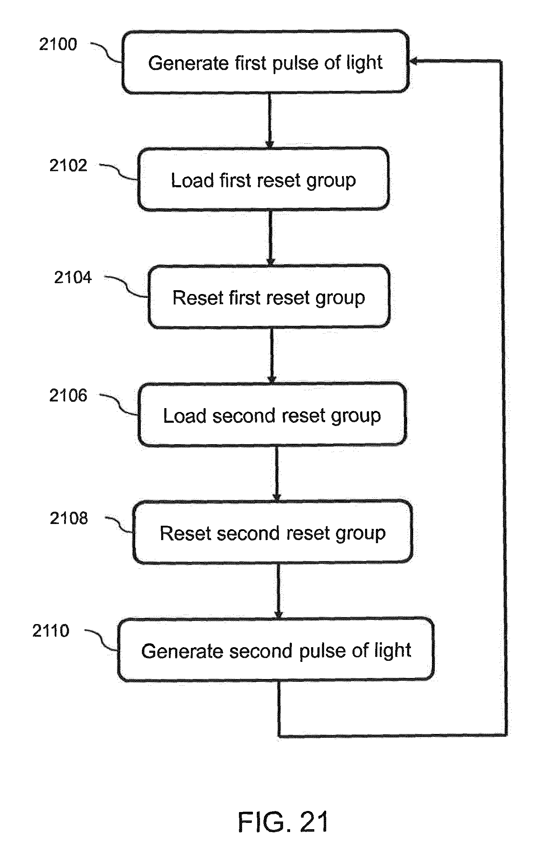

FIG. 21 shows a flowchart of a second timing method for pulsed-laser projection. In step 2100, a first pulse of light is generated. In step 2102, a stream of bit information is loaded into the first reset group to produce a desired data state of a DMD. In step 2104, the first reset group is reset. In step 2106, data is loaded into the second reset group. In step 2108, the second reset group is reset. In step 2110, a second pulse of light is generated. The process then goes back to step 2100 and cycles to continue generating light pulses and loading and resetting the first and second reset groups between the light pulses. No loads or resets take place between generating the second pulse of light in step 2110 and generating the first pulse of light in step 2100. In the first timing method (shown in FIG. 20), only one reset group is loaded between pulses, whereas in the second timing method (shown in FIG. 21), two reset groups are loaded between pulses.

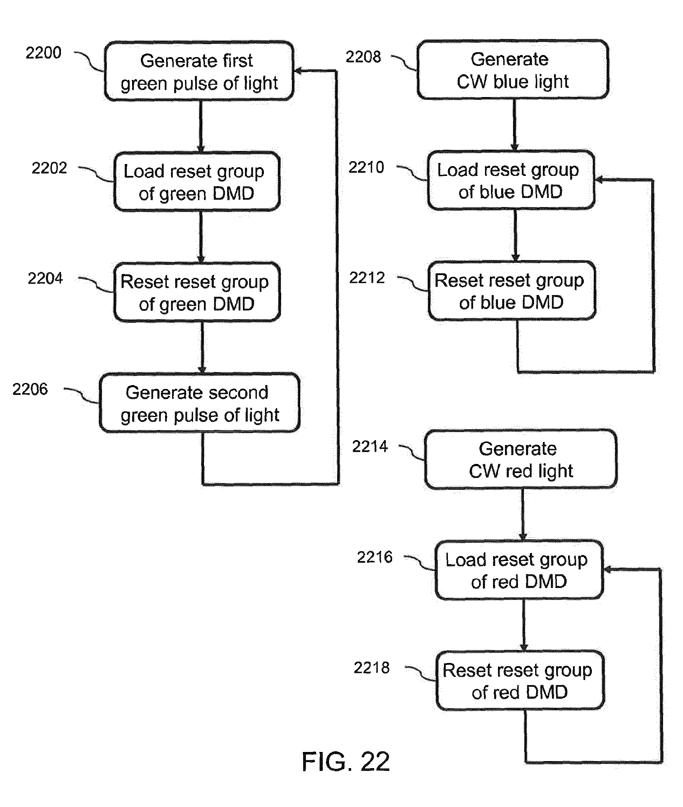

FIG. 22 shows a flowchart of a timing method for pulsed-laser projection that uses red, green, and blue light. In step 2200, a first pulse of green light is generated. In step 2202, data is loaded into a reset group of the green DMD. In step 2204, the green DMD reset group is reset. In step 2206, a second pulse of light is generated. The process then goes back to step 2200 and cycles to continue generating light pulses and loading and resetting reset groups between the light pulses. No loads or resets take place during the time of the light pulses. Concurrently with steps 2200 through 2206, in step 2208 continuous wave (CW) blue light is generated. In step 2210, data is loaded into a reset group of the blue DMD. In step 2212, the blue DMD reset group is reset. The process then goes back to step 2210 and cycles to continue loading and resetting reset groups of the blue DMD while CW blue light is being generated. Concurrently with steps 2200 through 2212, in step 2214 CW red light is generated. In step 2216, data is loaded into a reset group of the red DMD. In step 2218, the red DMD reset group is reset. The process then goes back to step 2216 and cycles to continue loading and resetting reset groups of the red DMD while CW red light is being generated.

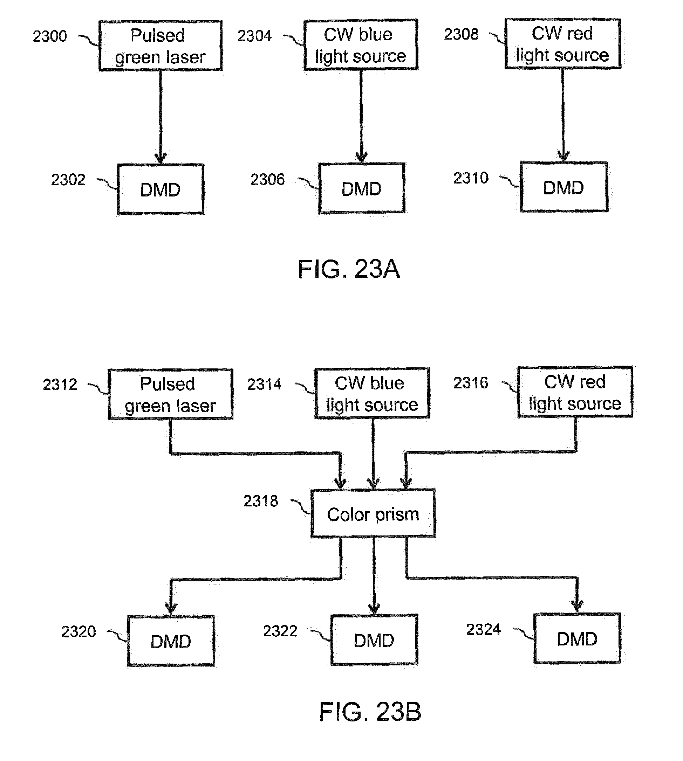

FIG. 23A shows a block diagram of an optical apparatus with three sources of light that separately illuminate three DMDs. Pulsed green laser 2300 illuminates DMD 2302. CW blue light source 2304 illuminates DMD 2306. CW red light source 2308 illuminates DMD 2310. CW blue light 2304 may have blue laser diodes that are operated in CW mode, and CW red light source 2308 may have red laser diodes that are operated in CW mode. For the purposes of this description, CW mode also includes quasi-CW mode where the light source is operated at a frequency in the range of zero to 2 kHz.

FIG. 23B shows a block diagram of an optical apparatus with three sources of light that combine and then separate to illuminate three DMDs. Pulsed green laser 2312, CW blue light source 2314, and CW red light source 2316 are combined to illuminate color prism 2318. Color prism 2318 separates the light so that the green light illuminates DMD 2320, the blue light illuminates DMD 2322, and the red light illuminates DMD 2324. CW blue light 2314 may have blue laser diodes that are operated in CW mode, and CW red light source 2316 may have red laser diodes that are operated in CW mode.

In addition to the color prism shown in the examples above, other optical components may be necessary to bring three colors of light to the DMDs and to reject light that is not output to the viewing screen. Red, green, and blue light beams may be split or combined with various optical components. DMD-based systems often use Philips prisms and total internal reflection (TIR) prisms to accomplish these goals. The wavelength of blue light is generally considered to be in the range of approximately 400 to 480 nm, green light is generally in the range of approximately 510 nm to 560 nm, and red light is generally in the range of approximately 590 to 700 nm. Once the image is formed by the DMDs, a projection lens transfers the image out to the plane of the viewing screen. In the case of front projectors, the throw distance between the projector and the viewing screen can be 10 feet to 100 or more. In the case of rear projectors, the throw distance is usually on the order of 1 to 10 feet.

If CW light is used for red and/or blue with pulsed green light, different bit sequences may be necessary for the DMDs that are illuminated with CW light compared to the bit sequence necessary for the DMD that is illuminated by pulsed green light. The hardware and software for loading bit sequences may require the ability to load different sequences into each DMD of the projector. The descriptions of CW red and blue light above may include the use of quasi-CW red or blue light or the use of red or blue lasers pulsed at high frequencies.

Although FIGS. 22, 23A, and 23B show three DMDs, one for each color, a similar concept applies to a single DMD projection system. In the case of a single DMD, multiple colors may be sequenced in time to provide full-color images.

In addition to video image content such as movies and television, DMDs may also be used to project other images. Structured light images such as grid patterns or other fixed or moving patterns may be projected for various applications. 3D information may be captured by using grid or line patterns that illuminate 3D scenes. Also infrared or other wavelengths of light may be used to illuminate rather than visible light.

Other implementations are also within the scope of the following claims.

Embodiments of the invention can be described with reference to the following numbered clauses, with preferred features laid out in the dependent clauses:
1. A method of generating light comprising:
   controlling a Q-switch to stay in a CW mode for a variable period of time;
   building a variable amount of energy in a laser crystal that depends on the variable period of time; and
   generating a variable-amplitude pulse of laser light that depends on the variable amount of laser energy.
2. The method of clause 1 wherein the variable-amplitude pulse of laser light is used to produce a digital image.
3. The method of clause 2 wherein the variable-amplitude pulse of laser light is used to increase a bit depth of the digital image.
4. The method of clause 1 further comprising:
   generating a first full-amplitude pulse of laser light before the variable-amplitude pulse of laser light; and
   generating a second full-amplitude pulse of laser light after the variable-amplitude pulse of laser light;
   wherein the period between the first full-amplitude pulse of laser light and the variable-amplitude pulse of laser light is equal to the period between the variable - amplitude pulse of laser light and the second full-amplitude pulse of laser light.
5. A method of digitally projecting an image comprising:
   generating a first pulse of light;
   loading a first reset group of a first digital micromirror device (DMD) with a first stream of bit information;
   resetting the first reset group to a first data state; and
   generating a second pulse of light;
   wherein loading the first reset group of the first DMD with the first stream of bit information and resetting the first reset group to the first data state occur between generating the first pulse of light and generating the second pulse of light; no light
   1 pulses are generated between generating the first pulse of light and generating the second pulse of light; and the first pulse of light and the second pulse of light illuminate the first DMD.
6. The method of clause 1 wherein the second pulse of light would cause a photoelectric upset of the first DMD if the second pulse of light occurs during the loading and resetting of the first reset group.
7. The method of clause 6 wherein no loading of the DMD takes place during the second pulse of light.
8. The method of clause 5 wherein the first pulse of light comprises laser light.
9. The method of clause 5 wherein the first pulse of light and the second pulse of light occur more than 18 microseconds apart and less than 200 microseconds apart.
10. An optical apparatus comprising:
   a first spatial light modulator;
   a second spatial light modulator; and
   a laser light source;
   wherein the laser light source is alternately switched to illuminate the first light spatial light modulator and the second spatial light modulator.
11. The apparatus of clause 10 wherein the first spatial light modulator comprises a digital micromirror device.
12. The apparatus of clause 10 wherein the laser light source comprises a pulsed laser.
13. The apparatus of clause 12 wherein the pulsed laser comprises a DPSS laser.
14. The apparatus of clause 10 wherein the laser light source generates a green light beam.
15. An optical apparatus comprising:
   a first laser light source that generates a first beam of light;
   a second laser light source that generates a second beam of light; and
   a first spatial light modulator;
   2 wherein the first beam of light comprises a first series of light pulses at a fixed wavelength; the second beam of light comprises a second series of light pulses at the fixed wavelength; the first beam of light is combined with the second beam of light to form a third beam of light; the third beam of light comprises a third series of light pulses; and the third beam of light illuminates the first spatial light modulator.
16. The optical apparatus of clause 15 wherein the first laser light source comprises a diode -pumped solid-state laser.
17. The optical apparatus of clause 16 wherein the diode -pumped solid-state laser comprises an intra-cavity frequency doubler.
18. The optical apparatus of clause 15 wherein the first spatial light modulator comprises a digital micromirror device.
19. The optical apparatus of clause 15 wherein the first series of light pulses are interleaved in time with the second series of light pulses to form the third series of light pulses.
20. The optical apparatus of clause 15 wherein the third series of light pulses has a frequency greater than approximately 50 kHz.

## Claims

1. A method of digitally projecting an image comprising:
generating a first pulse of light;
loading a first reset group of a first digital micromirror device (DMD) with a first stream of bit information;
resetting the first reset group to a first data state; and
generating a second pulse of light;
wherein loading the first reset group of the first DMD with the first stream of bit information and resetting the first reset group to the first data state occur between generating the first pulse of light and generating the second pulse of light; no light pulses are generated between generating the first pulse of light and generating the second pulse of light; and the first pulse of light and the second pulse of light illuminate the first DMD.

2. The method of claim 1 wherein the second pulse of light would cause a photoelectric upset of the first DMD if the second pulse of light occurs during the loading and resetting of the first reset group.

3. The method of claim 2 wherein no loading of the DMD takes place during the second pulse of light.

4. The method of claim 1 wherein the first pulse of light comprises laser light.

5. The method of claim 1 wherein the first pulse of light and the second pulse of light occur more than 18 microseconds apart and less than 200 microseconds apart.

6. The method of claim 5 wherein the first pulse of light and the second pulse of light occur more than 45 microseconds apart and less than 100 microseconds apart.

7. The method of claim 1 wherein the first pulse of light has a pulse width of less than 200 nanoseconds.

8. The method of claim 7 wherein the first pulse of light has a pulse width of less than 50 nanoseconds.

9. The method of claim 1 further comprising:
loading a second reset group of the first DMD with a second stream of bit information; and
resetting the second reset group to a second data state;
wherein loading the second reset group of the first with the second stream of bit information and resetting the second reset group to the second data state occur between resetting the first reset group to the first data state and generating the second pulse of light.

10. The method of claim 1 wherein the first pulse of light comprises green light.

11. The method of claim 10 further comprising:
generating continuous wave (CW) blue light;
loading a third reset group of a second DMD with a third stream of bit information; and
resetting the third reset group to a third data state;
wherein the CW blue light illuminates the second DMD.

12. The method of claim 11 further comprising:
generating CW red light;
loading a fourth reset group of a third DMD with a fourth stream of bit information; and
resetting the fourth reset group to a fourth data state;
wherein the CW red light illuminates the third DMD.
